# EUROPÄISCHE PATENTANMELDUNG

(11) **EP 0 908 807 A1**
(43) Veröffentlichungstag der Anmeldung: **14.04.1999**
(21) Anmeldenummer: 98117590.4
(22) Anmeldetag: 16.09.1998
(51) Int. Cl.: G05D 16/10, F17C 13/04, A61M 16/20

(54) **Gasentnahmesystem**

(30) Priorität: 06.10.1997 DE 19744048
(71) Anmelder: Messer Griesheim Schweisstechnik GmbH + Co., 64823 Gross-Umstadt (DE)
(72) Erfinder: Elsner, Peter, 65933 Frankfurt (DE); Elgert, Uwe, 60386 Frankfurt (DE)
(74) Vertreter: Berdux, Klaus, Dipl.-Ing.

(57) **Zusammenfassung**

Das Gasentnahmesystem mit integriertem zweistufigem Druckminderer für Druckgasquellen, wobei erste und zweite Regelstufe eine fallende Charakteristik aufweisen und vorzugsweise die Druckregeleinrichtungen der ersten und zweiten Stufe gegenüberliegend angeordnet sind, weist einen sehr kompakten Aufbau auf. Das Gasentnahmesystem enthält vorzugsweise ein Absperrventil zwischen den Druckregelstufen auf und wird beispielsweise bei Druckgasflaschen installiert. Das Gasentnahmesystem wird besonders vorteilhaft mit einer speziellen Schutzkappe kombiniert.

## Beschreibung

Die Erfindung betrifft einen zweistufigen Druckregler und dessen Verwendung zur Gasentnahme aus Druckgasbehältern.

Gewöhnlich werden Druckgasflaschen mit getrenntem Gasentnahmeventil, Druckreger und Gasdosiereinrichtung verwendet.

FR 9506784-A1 beschreibt eine Bauteilgruppe Absperrventil/Druckminderer für eine Gasflasche. Der Druckminderer ist einstufig.

Aufgabe der Erfindung besteht in der Bereitstellung einer kompakten Gasentnahmevorrichtung, die einen zweistufigen Druckminderer enthält.

Gelöst wurde die Aufgabe durch ein Gasentnahmesystem mit integriertem zweistufigem Druckminderer für Druckgasquellen, wobei erste und zweite Regelstufe eine fallende Charakteristik aufweisen und vorzugsweise die Druckregeleinrichtungen der ersten und zweiten Stufe gegenüberliegend angeordnet sind. Die Druckregeleinrichtungen des zweistufigen Druckminderers sind bevorzugt vom Typ Kolbenregler.

In einer bevorzugten Ausführungsform enthält das Gasentnahmesystem ein Absperrelement, wobei besonders bevorzugt das Absperrelement zwischen den Regelstufen des Druckminderers angeordnet ist.

Druckgasquellen sind beispielsweise Druckgasbehälter, Druckgasflaschen, Druckdosen, Druckgasleitungen, insbesondere Druckgasflaschen mit einem komprimierten Gas. Die Druckgasquelle liefern Gase oder Gasgemische, z. B. technische Gase wie Stickstoff, Sauerstoff, Wasserstoff, synthetische Luft, Edelgase (z. B. Helium, Argon, Krypton, Xenon), Kohlendioxid, Prüfgasgemische oder medizinische Gase wie Sauerstoff, Anesthesiegase, NO, N₂O, Xenon, Helium/Sauerstoff, NO/Stickstoff, insbesondere Sauerstoff.

Absperrelemente sind beispielsweise Absperrventile, insbesondere Absperrventile für Druckgasflaschen.

Die Gasentnahmeeinrichtung enthält einen Grundkörper, der aus einem thermisch formbaren Material wie Metall oder Kunststoff besteht. Der Grundkörper besteht vorzugsweise aus Metall, z. B. Messing oder Edelstahl, und weist vorzugsweise an einem Ende einen Anschluß, z. B. Gewindeanschluß, zur Befestigung an der Druckgasquelle auf. Der Grundkörper ist vorzugsweise zylindrisch und besonders bevorzugt im wesentlichen symmetrisch zur Längsachse aufgebaut. Der Grundkörper enthält Gaskanäle, beispielsweise in Form von Bohrungen. Der oder die Gaskanäle können Verzweigungen oder Abzweigungen aufweisen. Vorzugsweise enthält der Grundkörper einen zentralen Gaskanal entlang der Längsachse des Grundkörpers, ausgehend von einem Ende (Anschluß), der eine Verbindung zu einzelnen, mehreren oder allen Funktionselementen aufweist. Der zentrale Gaskanal hat eine direkte Verbindung zur Druckgasquelle. Vorzugsweise ist mit dem zentralen Gaskanal eine Füllstandsanzeige, ein Füllstutzen und ein Gasweg zu anderen Funktionselementen verbunden. In einer besonders bevorzugten Ausführung führt der Gasweg zunächst zur ersten Regelstufe des Druckminderers, dann zum Absperrelement (z. B. Absperrventil, 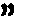 Flaschenventil"), von dort zur zweiten Regelstufe des Druckminderers, von dort zweigt der Gasweg in einen Ausgang zur Gasentnahme und zu einer Dosiereinrichtung mit einem Ausgang zur einstellbaren Gasmenge. Der zentrale Gaskanal enthält im Bereich des Anschlusses vorzugsweise ein Filterelement, z. B. ein Filter aus Sinterbronze. Der Grundkörper trägt die Funktionselemente, die beispielsweise mittels Gewinde angebracht sind. Funktionselemente sind z. B. eine Druckregelstufe des Druckminderers, ein Absperrventil, eine Füllstandsanzeige (z. B. Manometer) oder ein Füllstutzen.

Die Funktionselemente werden im folgenden erläutert.

Der Druckminderer (Druckregler) ist zweistufig. Die erste Regelstufe ist im allgemeinen für Hochdruck, z. B. von 300 bar auf 10 bar, ausgelegt. Die zweite Regelstufe ist im allgemeinen für Niederdruck, z. B. 10 bar auf 5 bar oder 2,5 bar, ausgelegt. Der zu regelnde Druck ist bei der ersten Regelstufe größer als bei der zweiten Regelstufe. Jede Regelstufe ist vorzugsweise mit jeweils einem Abblaseventil abgesichert. Geeignete Abblaseventile sind beschrieben in dem deutschen Gebrauchsmuster G 91 02 891.4-U1, worauf Bezug genommen wird. Vorteilhaft ist die Verwendung von Abblaseventilen mit zylindrischem Gehäusekörper, insbesondere zylindrische Gehäusekörper mit Gewinde. Abblaseventile mit zylindrischem Gehäusekörper und Gewinde lassen sich auf einfache Weise in den Grundkörper, z. B. an einer Seite des Grundkörpers, einschrauben und leicht montieren. Abblaseventile sind vorzugsweise ausbrenngeprüft, insbesondere bei Verwendung für Sauerstoff. Der Grundkörper der Abblaseventile läßt sich vorteilhaft aus thermoplastischem Kunststoff (z. B. ABS, Polyamid oder andere technische Kunststoffe) herstellen. Die erste und zweite Druckregelstufe sind vorteilhaft als Kolbenregler ausgeführt.

Die Regelstufen können regelbar (Regeldruckbereich einstellbar) oder der Regeldruckbereich fest eingestellt sein. Vorzugsweise ist der Regeldruck (Druckminderung) fest eingestellt. Die erste und zweite Regelstufe des Druckminderers weisen vorzugsweise eine fallende Charakteristik auf, das heißt sie sind gegen den Vordruck (höherer Druck) schließend.

Vorteil des zweistufigen Druckminderers gegenüber einem einstufigen Druckminderer bei einem Gasentnahmesystem ist eine erhöhte Sicherheit und eine höhere Regelgenauigkeit.

Vorzugsweise sind die erste und zweite Regelstufe des Druckminderers gegenüberliegend am Grundkörper in einer horizontalen Ebene ausgerichtet angeordnet. In dieser horizontalen Ebene sind besonders bevorzugt auch die Abblaseventile der beiden Regelstufen angeordnet. Durch diese Anordnung dieser Bauteile wird ein besonders kompakter Aufbau mit kleinen Abmessungen des Gasentnahmesystems erreicht, insbesondere wenn Regelstufen mit fest eingestelltem Regelbereich (fest eingestelltes oder vorgegebenes Druckminderungsverhältnis) eingesetzt werden.

Das Absperrelement (z. B. Absperrventil, Absperrkolbenventil, Absperrmembranventil, Drehventil, Schieber, Absperrhebel, Flaschenventil) ist vorzugsweise zwischen erster und zweiter Regelstufe des Druckminderers angeordnet. Das Absperrelement öffnet und schließt unter dem Zwischendruck, das ist ein Druckbereich von z. B. bis zu 10bar. Vorzugsweise ist das Absperrelement hochdruckfest ausgeführt (z. B. bis 300 bar oder mehr). Eine hochdruckfeste Ausführung des Absperrelementes dient zur Erhöhung der Sicherheit. Aufgrund der Anordnung des Absperrelementes zwischen den Regelstufen des Druckminderers kann eine sehr leichtgängige Verstellung erreicht werden, da das Absperrelement (z. B. Flaschenventil) gegen den geminderten Druck statt dem Druck der Druckgasquelle schließt. Das Absperrelement ist vorzugsweise ein Ventil mit Schließkolben.

In einer besonders bevorzugten Ausführungsform enthält das Absperrelement eine selbstnachstellende Stellungsanzeige (Anzeige von geöffnetem oder geschlossenem Zustand, d. h. Auf/Zu), die sich bei Verschleiß der Dichtteile selbsttätig nachstellt. Bei üblichen Absperrventilen ist die Stellungsanzeige fest mit dem Handrad verbunden. Bei einer selbstnachstellenden Stellungsanzeige ist eine zylindrische Kappe mit zentraler Öffnung auf die Kopfschraube des Ventiles gesteckt, wobei die Kappe auf der Kopfschraube friktionsgekoppelt sitzt, aber durch Krafteinwirkung bewegt werden kann. Die Kappe der Stellungsanzeige verfügt auf der Oberseite einen Zapfen als Mitnehmer, der als Gegenstück einen Anschlag (Nase) am Handrad findet. Der Anschlag am Handrad greift den Mitnehmer nur bei verschließender Drehbewegung des Handrades und erst in unmittelbarer Schließstellung. Bei Veränderung der Schließstellung durch Abnutzung der Dichtelemente wird bei Zudrehen des Ventiles die Stellungsanzeige mitgenommen. Für ein Öffnen und Schließen des Ventiles genügt eine Drehung um einen Winkel von maximal 180°. Beim Öffnen des Ventiles verbleibt die Stellungsanzeige in der beim Schließen eingenommenen Stellung. Das Prinzip der selbsteinstellenden Stellungsanzeige bei Absperrventilen ist in DE 43 09 753 A1 beschrieben, worauf hiermit bezug genommen wird.

Die Dosiereinrichtung ist allgemein eine Einrichtung zur Entnahme einer regelbaren Gasmenge, die dem Druckminderer nachgeschaltet ist. Die Dosierung des entnommenen Gases erfolgt im allgemeinen durch Veränderung des Querschnittes des Gaseweges (Drossel), z. B. mittels eines Nadelventiles oder einer Lochblende. Eine Gasdosierung mittels Blende wird für eine genaue Dosierung des Gases bevorzugt. Eine drehbare Blendenscheibe mit kreisförmigen Öffnungen bestimmter Größe (Revolverblendenscheibe) ist für eine in Stufen einstellbaren entnehmbaren Gasmenge besonders vorteilhaft. Ein solcher geregelter Ausgang arbeitet z. B. im Bereich von 0 bis 15 L/min. (Stufen: 0, 1, 2, 3, 4, 5, 6, 9, 12, 15 L/min.). Der Ausgang der Dosiereinrichtung enthält z. B. eine Schlauchtülle (Schlaucholive) für einen Schlauchanschluß. Die Dosiereinrichtung enthält vorteilhaft einen ungeregelten Ausgang für z. B. 5 bar, der vor der Gasregulierung (vor der eigentlichen Dosiereinrichtung) abgeht und vorzugsweise mit einem Rückschlagventil oder einem Entnahmeventil ausgestattet ist. Der ungeregelte Ausgang besitzt z. B. einen Anschluß mit einem Gewinde (z. B. M12x1 nach DIN) oder einem Bajonettanschluß.

Der Füllstutzen ist vorzugsweise auswechselbar über Gewindeanschluß am Grundkörper angebracht und hat eine direkte Verbindung zum Gaseingang am Anschlußteil des Grundkörpers. Der Füllstutzen kann daher durch andere Füllstutzen für andere Anschlußsysteme leicht ausgetauscht werden. Der Füllstutzen enthält vorzugsweise ein Rückschlagventil, das für eine automatische Befüllung eines Druckgasbehälters über den Füllstutzen geeignet ist. Vorteilhaft hat der Füllstutzen ein besonderes Außengewinde, auf das nur ein besonderes Anschlußstück paßt. Dadurch soll eine Benutzung des Füllstutzens durch Unbefugte vermieden werden.

Der Füllstutzen besteht vorzugsweise aus Metall, z. B. Messing, insbesondere Messing verchromt oder Edelstahl.

Eine manuelle oder automatische Gasbefüllung eines angeschlossenen Druckgasbehälters über den Füllstutzen ist bei geschlossenem Absperrventil möglich.

Ein Manometer mit Verbindung zur Gasquelle dient vorteilhaft zur Anzeige des Füllzustandes (des vorhandenen Gasinhalts der Gasquelle). Ein geeignetes Manometer ist beispielsweise ein Hochdruckinhaltsmanometer, z. B. für 300 bar. Besonders vorteilhaft ist ein Manometer mit Doppelskala zur Anzeige für Druck der Gasquelle und Litermenge der verfügbaren Gasmenge (Restgasmenge).

Das Gasentnahmesystem ist bei allen gebräuchlichen Druckgasflaschen einsetzbar, beispielsweise bei 0,5, 1, 2, 5, 10, 20 und 50 Liter-Druckgasflaschen. Das Gewinde für den Anschluß an eine Druckgasflasche ist z. B. W28,8x1/14 Zoll (Großkonus) oder W19,8x1/14 Zoll (Kleinkonus).

Gasentnahmesystem und Druckgasquelle, insbesondere Druckgasflasche, bilden vorzugsweise eine Einheit. Vorzugsweise wird das Gasentnahmesystem an einer Druckgasflasche fest installiert. Die Befüllung einer Druckgasflasche mit Gasentnahmesystem erfolgt bevorzugt über den Füllstutzen des fest installierten Gasentnahmesystems.

Besonders bevorzugt ist eine Einheit aus Gasentnahmesystem, Schutzkappe und Druckgasquelle, insbesondere Druckgasflasche. Die Schutzkappe kann ein- oder mehrteilig aufgebaut sein.

Eine geeignete Schutzkappe für das Gasentnahmesystem mit Druckgasquelle, insbesondere mit Druckgasflasche, weist zwei miteinander verbundene Halbschalen, einen inneren Hohlraum zur Aufnahme des Gasentnahmesystems, mindestens eine seitliche Aussparung und eine Aussparung auf der Kopfseite und eine Einrichtung zur Befestigung an der Druckgasquelle auf, wobei die Schutzkappe an der mit dem Gasentnahmesystem ausgestatteten Druckgasquelle montiert werden kann, ohne daß das Gasentnahmesystem abgenommen oder angeschlossene Leitungen gelöst werden müssen.

Der innere Hohlraum der Schutzkappe ist vorteilhaft so bemessen, daß der Raum für die Aufnahme des Gasentnahmesystems gerade ausreicht.

Die Schutzkappe enthält beispielsweise eine Aussparung an der Vorderseite für den Zugang zur Dosiereinrichtung mit den Gasausgängen und für die Ablesbarkeit der Füllstandsanzeige, an der Rückseite eine Aussparung für den Zugang zum Füllstutzen und an der Oberseite einen Zugang für das Handrad des Absperrelementes. Die Größe der Aussparung im Kopfbereich an der Oberseite der Schutzkappe ist so ausgelegt, daß das Handrad des Absperrelementes bei aufgesetzter Schutzkappe der Hand zugänglich ist und betätigt werden kann. Die Größe der seitlichen Aussparung muß bei aufgesetzter Schutzkappe den freien Anschluß an das Gasentnahmesystem gewährleisten. Die seitlichen Aussparungen sind bevorzugt von gleicher oder ähnlicher Größe und sind gegenüberliegend. Statt zwei seitlichen Aussparungen kann die Schutzkappe auch vier seitliche Aussparungen aufweisen, die vorteilhaft symmetrisch zueinander angeordnet sind. Die für den Zugang zum Füllstutzen vorgesehene Aussparung wird vorteilhaft durch einen Deckel, eine Klappe oder eine verschiebbare Abdeckung verschlossen.

Die Einrichtung zur Befestigung der Schutzkappe an der Druckgasquelle (insbesondere Druckgasflasche), im folgenden Befestigungseinrichtung genannt, ist im Bodenbereich der Schutzkappe angebracht. Die Befestigungseinrichtung ist beispielsweise ein Gewinde oder wird durch hervorstehende Ausbildungen wie Rillen oder Zähne gebildet, die z. B. in das Außengewinde am Flaschenhals einer Druckgasflasche greifen. Die Befestigungseinrichtung kann auch als Bajonettverschluß, Klemmverschluß oder Schnappverschluß ausgebildet sein, wobei ein Adapterstück auf das Flaschengewinde aufgesetzt werden kann. Auch bei einer Befestigung der Schutzkappe mit einer gewindeartigen Befestigungseinrichtung kann ein Adapterstück zur Druckgasflasche vorteilhaft sein, z. B. bei der Befestigung der Schutzkappe an eine Druckgasflasche mit kleinerem Flaschengewinde. Die Befestigungeinrichtung kann auch ein Spannband oder Riemen enthalten. Das Spannband wird beispielsweise um den Boden der Druckgasflasche geführt und wird an der Schutzkappe lösbar befestigt. Als Befestigungseinrichtung können auch Ösen, Bänder oder Laschen an der Schutzkappe sein, wobei an der Druckgasquelle, insbesondere Druckgasflasche, entsprechende Gegenstücke zur Befestigung angeordnet sind. Die Schutzkappe kann als Befestigungeinrichtung auch einen durchgehenden Wulst, Rollrand oder Kragen an der Grundseite der Schutzkappe aufweisen, die als Ansatz für ein Verbindungselement zur Druckgasquelle (z. B. Druckgasflasche) dienen. Das Verbindungselement kann aus einem Metall oder Kunststoff bestehen, beispielsweise ein Schrumpffolienschlauch. Die entsprechend ausgestattete Schutzkappe kann auch flanschartig an der Druckgasquelle befestigt werden, wenn die Druckgasquelle ein entsprechendes Gegenstück aufweist. Die Schutzkappe enthält vorzugsweise eine Verdrehsicherung, eine Rollsicherung, eine Tragevorrichtung und/oder eine Aufhängevorrichtung. Die Verdrehsicherung der Schutzkappe dient zur Fixierung der Schutzkappe auf der Druckgasquelle, insbesondere Druckgasquelle, so daß die Schutzkappe gegenüber der Druckgasquelle nicht verdreht werden kann. Die Verdrehsicherung ist beispielsweise eine rechteckige Aussparung im Inneren der Schutzkappe zur Aufnahme des vorzugsweise vorhandenen Vierkants am Grundkörper des Gasentnahmesystems. Die Rollsicherung ist vorzugsweise bei dem Einsatz der Schutzkappe an Druckgasflaschen vorhanden. Die Rollsicherung ist eine oder mehrere Ausformungen an der Schutzkappe, die über die Druckgasflasche überstehen und ein Rollen der liegenden Druckgasflasche verhindert. Die Rollsicherung ist vorteilhaft im Boden- oder Sockelbereich der Schutzkappe, das heißt an dem der Druckgasflasche am nächsten gelegenen Teil der Schutzkappe, angebracht. Die Rollsicherung ist ein Bestandteil der Schutzkappe, der über den Druckgasflaschenquerschnitt übersteht. Die Rollsicherung ist beispielsweise ein eckiger Wulst, ein oder mehrere eckige Vorsprünge, Stege oder Zapfen, ein oder mehrere Stege, eine eckige Grundfläche oder ein eckiges Profil im Sockelbereich. Die Ecken der Schutzkappenausformungen sind zur Grundfläche der Schutzkappe ausgerichtet, d. h. in der Ebene der Grundfläche oder parallel dazu. Die Tragevorrichtung an der Schutzkappe besteht beispielsweise aus einem oder mehreren Griffen. Der Griff kann ein Haltebügel, eine Griffstange, eine Griffplatte oder eine Griffmulde sein. Der Griff ist vorzugsweise in die Schutzkappe integriert und ist bevorzugt beweglich, insbesondere klappbar. Der klappbare Griff ist in einer der drei Raumrichtungen drehbar gelagert. Der Griff kann beispielsweise durch ein Scharnier im Kopfbereich von unten nach oben herausgeklappt werden. Der Griff kann auch im Kopfbereich als seitlich ausschwenkbares Teil ausgebildet sein. Der Griff kann auch als schiebbares Teil ausgebildet sein, z. B. als herausziehbarer Griff in Richtung der Schutzkappenlängsachse oder senkrecht dazu. Die bewegliche Tragevorrichtung ist vorteilhaft arretierbar. Die Arretierung kann beispielsweise durch eine Vorrichtung zum Einrasten (z. B. eine Vertiefung an der Tragevorrichtung oder Schutzkappe, wo ein federnd angebrachtes Teil (z. B. Kugel mit Druckfeder, Federarm aus einem biegsamen Kunststoff mit Zapfen oder halbkugelförmiger Erhebung) angreift. Die Arretierung kann auch durch eine Klemmvorrichtung erfolgen. Die Aufhängevorrichtung an der Schutzkappe kann beispielsweise ein Haken oder ein hakenförmiges Teil sein. Die Aufhängevorrichtung ist bevorzugt beweglich. insbesondere klappbar. Die Aufhängevorrichtung kann analog zur Tragevorrichtung aufgebaut sein, sie kann auch arretierbar sein. Die Schutzkappe kann auch Einrichtungen enthalten, die die Befestigung einer Aufhängevorrichtung ermöglichen, z. B. eine Aussparung, in die ein Haken greifen kann, wie Gewindelöcher, Stege oder Noppen.

Die Schutzkappe ist bevorzugt zylindrisch aufgebaut. Der Querschnitt der Schutzkappe (Grundfläche) kann rund, elliptisch, viereckig oder vieleckig sein und sollte insbesondere einen Durchmesser haben, der sich nicht wesentlich vom Durchmesser der Druckgasflasche unterscheidet. Beispielsweise liegt der Durchmesser der Schutzkappe im Bereich von Gasflaschendurchmesser bis 10 Prozent darüber. Günstig ist, wenn die Schutzkappe bündig mit der Druckgasflasche abschließt und weitgehend symmetrische Gestalt hat. Die Größe der Schutzkappe kann variieren. Vorteilhaft ist eine Mindestgröße der Schutzkappe so daß die Schutzkappe über das Gasentnahmesystem gestülpt werden kann.

Vorteilhaft wird die Schutzkappe aus zwei miteinander verbundenen Halbschalen gebildet. Die Trennung der Halbschalen verläuft vorzugsweise in einer Fläche, die die Längsachse der Schutzkappe enthält. Die Halbschalen sind vorzugsweise gleich. Die lösbare Verbindung der Halbschalen erfolgt beispielsweise durch eine Verschraubung, durch eine Steckverbindung, durch eine kombinierte Steck-/Schraubverbindung, durch ein oder mehrere Spannbänder oderringe. Die Halbschalen können beispielsweise Paßstifte oder Nut/Feder (Nut-oder Federelemente) als Hilfsmittel für eine Steckverbindung enthalten. Die zusammengesteckten Halbschalen können zusätzlich mit einem Band oder Riemen oder mit einem Schrumpffolienschlauch verbunden werden.

Die Schutzkappe kann zusätzliche Hohlräume aufweisen, die zur Aufnahme von Teilen oder Informationsunterlagen dienen (z. B. Kammer für Zubehör). Die Kammer befindet sich bevorzugt im Kopfbereich der Schutzkappe (z. B. auf der Oberseite als ringförmiger Hohlraum, der mit einem ringförmigen Deckel verschlossen werden kann). Die Kammer ist vorteilhaft von außen zugänglich.

Die Schutzkappe kann auch einen Federclip (auch mehrere Federclips) enthalten, an den ein Informationsblatt geklemmt werden kann. Der Federclip kann aus Kunststoff oder Metall sein.

Die Schutzkappe oder Teile der Schutzkappe bestehen vorzugsweise aus einem thermoplastischen Kunststoff, z. B. Polyoxymethylen, Polyethylen, Polypropylen, Polystyrol, PVC, Polyester, Polyamid, flüssigkristallines Polymer (LCP). Der thermoplastische Kunststoff kann auch ein Blend sein. Vorteilhaft sind die thermoplastischen Kunststoffe faserverstärkt (z. B. Glasfaser, Mineralfaser, Carbonfaser). Ein geeigneter Kunststoff ist Polyamid mit 30 Gewichtsprozent Glasfaser. Der Kunststoff kann geschäumt sein.

Die Schutzkappe oder Teile der Schutzkappe können durch übliche thermische Kunststoffverarbeitungsverfahren wie Extrusion oder Spritzguß hergestellt werden. Eine dünnwandige Ausführung der Schutzkappe wird bevorzugt.

Im folgenden wird die Erfindung anhand der Abbildungen mit Beispielen erläutert.

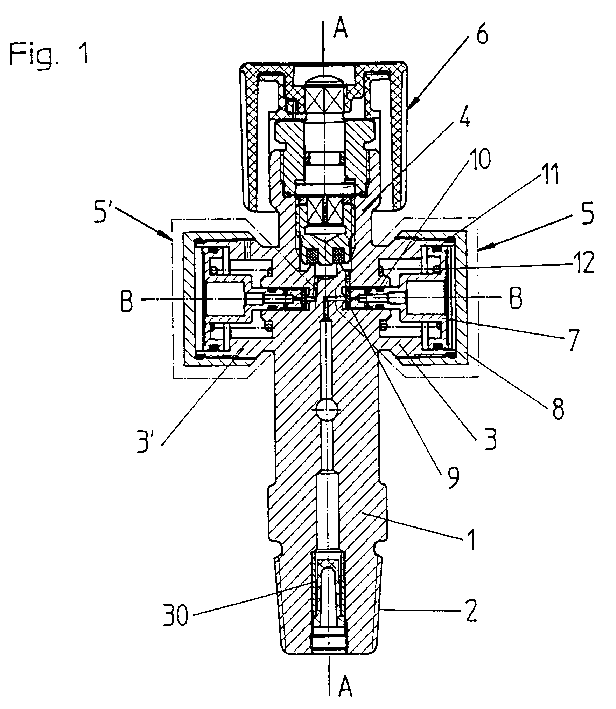

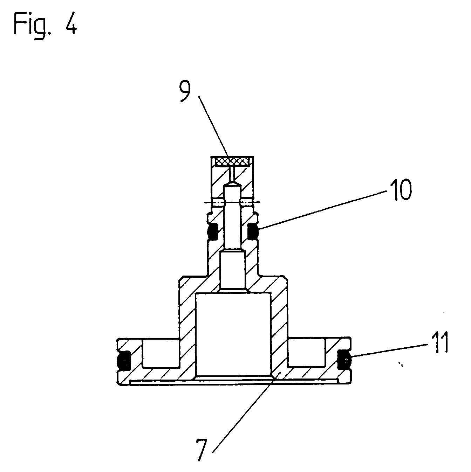

Fig. 1 zeigt eine bevorzugte Ausführung der Gasentnahmeeinrichtung im Längsquerschnitt entlang der Achse A-A. Man erkennt die folgenden Teile: Grundkörper 1 mit Anschlußgewindeteil 2 (zur Gasquelle), Aufnahmeteile 3 und 3 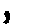 für die Druckmindererstufen 5 (1. Stufe) und 5 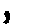 (2. Stufe) und Aufnahmeteil 4 für das Absperrelement 6. Die erste und zweite Druckmindererstufe sind gegenüberliegend am Grundkörper 1 angeordnet. Erste und zweite Druckmindererstufe sind in der Funktionsweise gleichartig aufgebaut. Die erste Druckmindererstufe 5 und zweite Druckmindererstufe 5 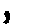 enthalten ein Aufnahmeteil 3 bei der ersten Stufe und 3 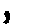 bei der zweiten Stufe (als Teile des Grundkörpers 1), ein Kolbenteil 7 (erste Stufe) und ein analoges Kolbenteil bei der zweiten Stufe und einen Deckel (8 bei erster Stufe). Das Kolbenteil 7 wird in Fig. 4 gesondert gezeigt. Das Aufnahmeteil 3 und 3 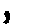 enthält eine zweistufige zylindrische Aussparung im Grundkörper 1 mit einem kleinen Durchmesser der Aussparung im Bereich des Ventilsitzes und einem größeren Durchmesser der Aussparung im äußeren Bereich. Dieser äußere Bereich des Aufnahmeteiles 3 und 3 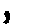 steht als zylindrischer Teil mit Außengewinde vom eigentlichen Grundkörper ab.

Der Vordruck (Druck der Druckgasquelle) liegt an der Ventilsitzdichtung 9 der ersten Regelstufe 5 an. In dem freien Raum (Zwischenraum) zwischen der zylindrischen Aussparung im Grundkörper 1 für das Vorderteil des Kolbenteils 7 und dem Vorderteil des Kolbenteils 7 bis zur Kolbendichtung 10 des Kolbenvorderteils mit kleinem Kolbendurchmesser (siehe Fig. 4) liegt der Regeldruck (Zwischendruck) an. Vor der Kolbendichtung 10 weist das Kolbenteil 7 eine Öffnung auf, die eine Verbindung des Zwischenraumes mit dem inneren Hohlraum des Kolbenteiles (Innenraum) herstellt, so daß der Zwischendruck im Hohlraum anliegt. Der Innenraum des Kolbenteiles ist nach außen über den Deckel 8 abgedichtet (Dichtring 11). Das Kolbenteil 7 weist am Ende des größeren Kolbenteiles (nach außen zum Deckel gerichtetes Teil) einen Kragen auf, der einen Sitz für die Stellfeder 12 bildet. Die Stellfeder 12 druckt auf den Grundkörper 1 im Bereich des Bodens der zylindrischen Aussparung mit dem größeren Durchmesser. Die zweite Druckregelstufe 5 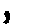 ist analog zur ersten Druckregelstufe 5 aufgebaut und unterscheidet sich im wesentlichen nur durch die Rückstellkraft der Stellfeder.

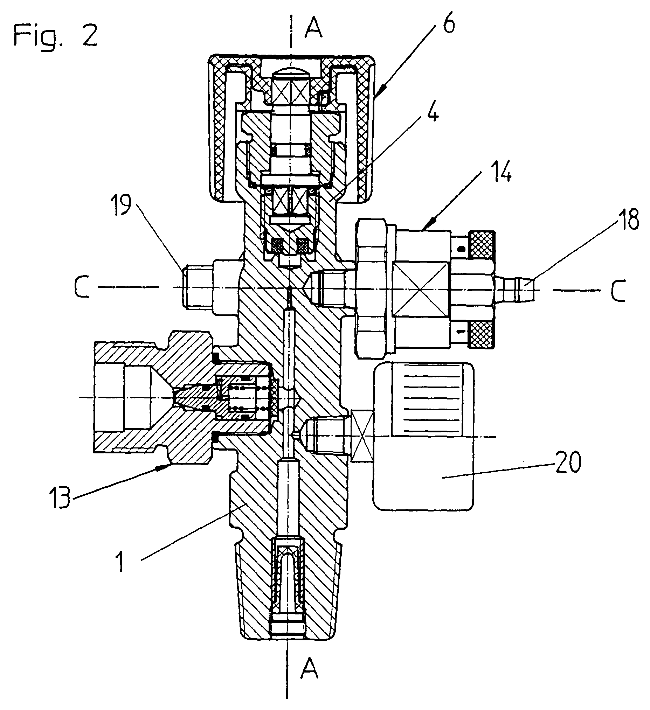

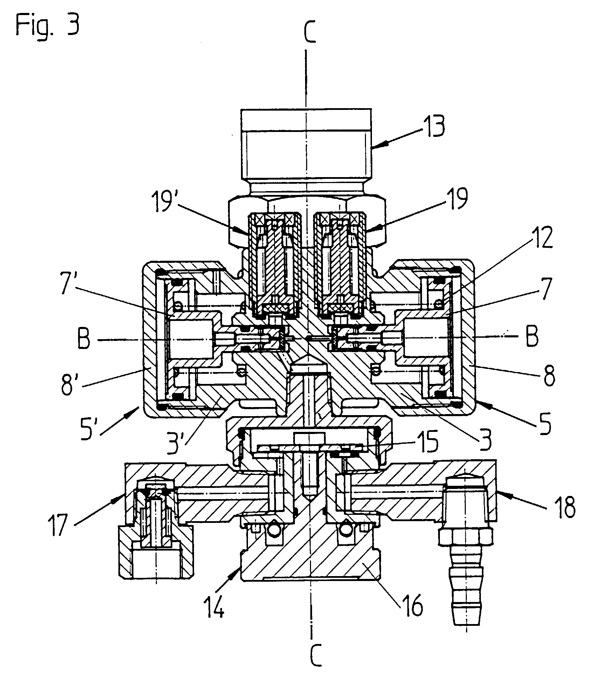

Fig. 2 zeigt eine schematische Darstellung des Gasentnahmesystems von Fig. 1 im Längsschnitt, wobei die Schnittsebene die in Fig. 1 gezeigte Längsachse A-A und die Achse C-C enthält wobei die Achse C-C senkrecht auf der Achse B-B steht. Man erkennt die Anordnung von Füllstutzen 13, Füllstandsanzeige 20, Dosiereinrichtung 14 und Abblasventil 19 am Grundkörper 1. Abblaseventile 19, 19 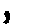 und Dosiereinrichtung 14 liegen in einer Ebene mit der ersten und zweiten Druckregelstufe, dies ist besonders gut in Fig. 3 zu erkennen.

Fig. 3 zeigt eine schematische Darstellung des Gasentnahmesystems von Fig. 1 im Querschnitt, wobei die Querschnittsebene die Achsen B-B und C-C enthält und die Querschnittsebene senkrecht zur Längsachse A-A steht. In der Querschnittsebene liegen erste Druckregelstufe 5 und zweite Druckregelstufe 5 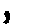 , Abblaseventile 19 und 19 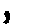 und Dosiereinrichtung 14. Das Abblaseventil 19 der ersten Regelstufe 5 steht mit dem Zwischenraum der ersten Stufe in Verbindung. Am Abblaseventil 19 liegt der Zwischendruck, vorliegend am Ausgang der ersten Regelstufe, an. Der Gasweg führt über das Absperrelement 6 zum Eingang der zweiten Regelstufe 5 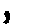 . Dort wird der Zwischendruck (Vordruck der zweiten Regelstufe) zu einem niederen Druck (Enddruck der zweiten Stufe) geregelt. Der Enddruck der zweiten Regelstufe liegt am Zwischenraum der zweiten Regelstufe an. Dieser Zwischenraum steht in Verbindung mit dem Abblaseventil 19 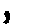 , dem Gasausgang 17 und der Gasdosiereinrichtung 14. In der Dosiereinrichtung 14 dient die verstellbare Blendenscheibe 15 mit auf die Gasmenge abgestimmten Blendenöffnungen zur weiteren Drosselung des Enddruckes der zweiten Regelstufe auf den Gasentnahmedruck. Das Bedienelement 16 ist ein Stufendrehknopf zur Einstellung der Blendenscheibe. Damit wird die gewünschte Blendenöffnung der Blendenscheibe in den Gasweg gebracht, so daß eine definierte Gasmenge am Ausgang 18 entnommen werden kann.

Fig. 4 zeigt den Kolbenteil einer Druckminderungsstufe im Querschnitt. Der Grundkörper des Kolbenteiles 7 und 7' weist ein Kolbenteil mit kleinem Durchmesser und ein Kolbenteil mit großem Durchmesser auf, die jeweils einen Kolbendichtring 10 und 11 tragen. Der Kolbendichtring 11 des Kolbenteils mit großem Durchmesser das Kolbenteil 7 dichtet gegen das Aufnahmeteil 3 des Grundkörpers ab. Der Grundkörper des Kolbenteiles ist z. B. aus Metall wie Aluminium, Edelstahl oder Messing. Der Kolbenteil mit kleinem Durchmesser trägt auf der Stirnseite die Ventilsitzdichtung 9, die beispielsweise eingebördelt eingespritzt oder einvulkanisiert ist. Als Dichtungsmaterial dient z. B. ein Elastomer.

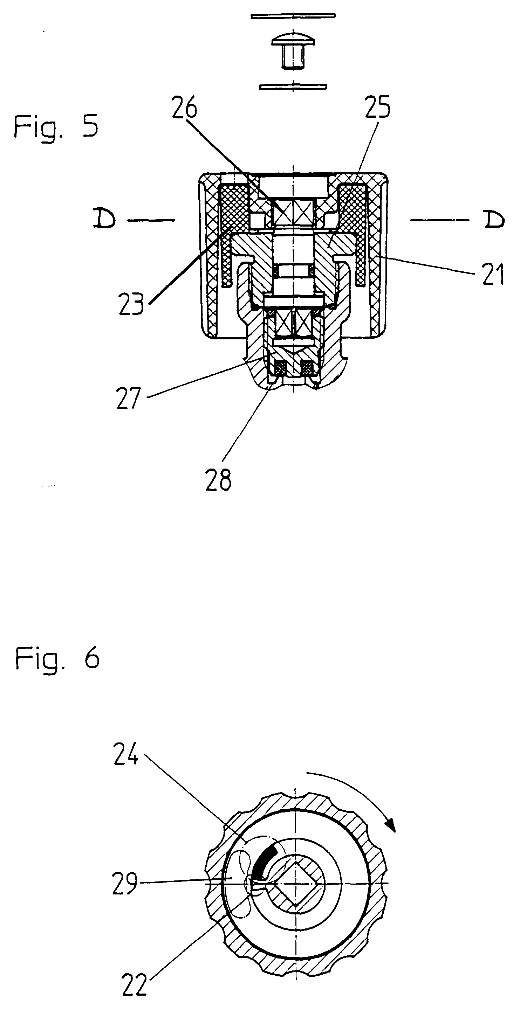

Fig. 5 zeigt eine bevorzugte Ausführung des Absperrelementes mit Stellungsanzeige für das Gasentnahmesystem (Längsschnitt entlang Achse A-A). Kappe 23 und Handrad 21 enthalten die Stellungsanzeige (Auf/Zu). Die Kappe 23 sitzt auf der Kopfschraube 25 friktionsgekoppelt und drehbar auf. Die Kappe 23 enthält einen Mitnehmer (Zapfen) 24 (gezeigt in Fig. 6) auf, an den bei Drehung in Schließrichtung der Mitnehmer (Nase) 22 (gezeigt in Fig. 6) des Handrades angreift. Auf der Oberseite der Kappe 23 ist eine ringförmige zweifarbige Markierung (grüner und roter Bereich) für die Stellungsanzeige angebracht. Ein Fensterausbruch 29 (Sichtfenster, gezeigt in Fig. 6) am Handrad 21 gestattet Sicht auf einen Teil der Markierung, d. h. Rot- oder Grünanzeige, je nach Ventilstellung. Die Bewegung des Handrades wird über ein Zwischenstück 26 mit Außen-Vierkant an beiden Enden auf die Absperrspindel 27 übertragen. Das zylindrische Zwischenstück 26 gleitet in dem zylindrischen freien Raum im Zentrum der Kopfschraube 25. Das Dichtelement 28 (z. B. Dichtring aus Elastomer) am Fuß der Absperrspindel 27 drückt bei geschlossener Stellung des Ventiles auf den Ventilsitz.

Kopfschraube 25, Zwischenstück 26 und Absperrspindel 27 sind vorzugsweise aus Messing oder Edelstahl. Handrad 21 und Kappe 23 sind vorzugsweise aus einem thermoplastischen Kunststoff, insbesondere Polyamid (z. B. Polyamid 6 mit 30-35 Gew.-% Glasfaserfüllung). Das Handrad enthält vorzugsweise eine transparente oder im Bereich des Sichtfensters transparente Kunststoffabdeckung.

Fig. 6 zeigt das Handrad des Absperrelementes von Fig. 5 im Querschnitt durch D-D. Der Pfeil in der Abbildung markiert die Schließrichtung des Absperrelementes. Das Handrad enthält an der Unterseite eine Vierkant-Öffnung zur Befestigung am oberen Vierkant des Zwischenstückes 26. Der runde Bereich um die Vierkantöffnung trägt den Mitnehmer 22 (nasenförmiger Anschlag). Zur Verdeutlichung der Funktionsweise der Stellungsanzeige ist der zapfenförmige Mitnehmer 24 der Kappe 23 flächig schwarz eingezeichnet. Der Fensterausbruch 29 gestattet Sicht auf die farbige Markierung auf der Kappe 23.

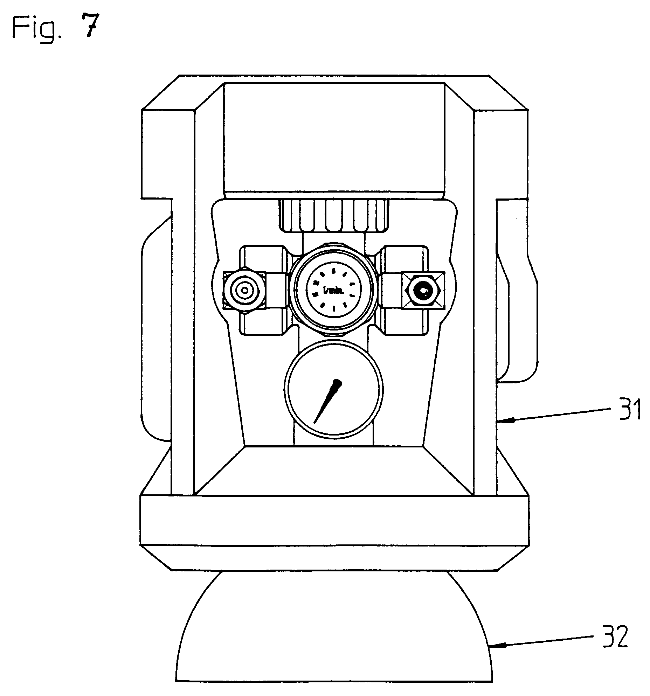

Fig. 7 zeigt schematisch eine Seitenansicht eines Beispiels der Kombination von Gasentnahmesystem (in der Mitte), Schutzkappe 31 und Druckgasflasche 32.

Das bevorzugte Gasentnahmesystem ist sehr kompakt aufgebaut. Der eigentliche Grundkörper hat einen äußeren Durchmesser von etwa 3 cm. Der Abstand zwischen den Außenseiten der Druckmindererstufendeckel 8 und 8 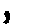 mißt etwa 8 cm. Die Deckel 8 und 8 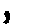 wie auch die Dosiereinrichtung 14 haben einen äußeren Durchmesser von erna 3,5cm. Die Höhe des Grundkörpers von Unterkante des Anschlußgewindes 2 zur Druckgasquelle und der Oberkante des Handrades des Absperrelementes 6 mißt etwa 16 cm.

Liste der aufgeführten Teile (gestrichene Zahlen bezeichnen die 2. Regelstufe):

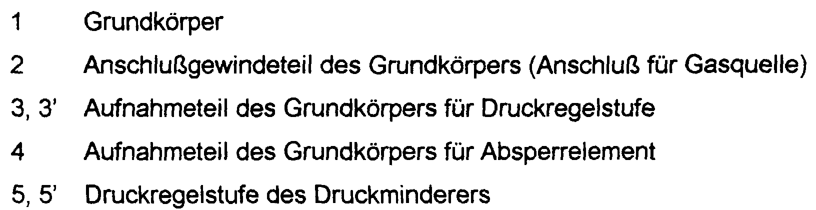

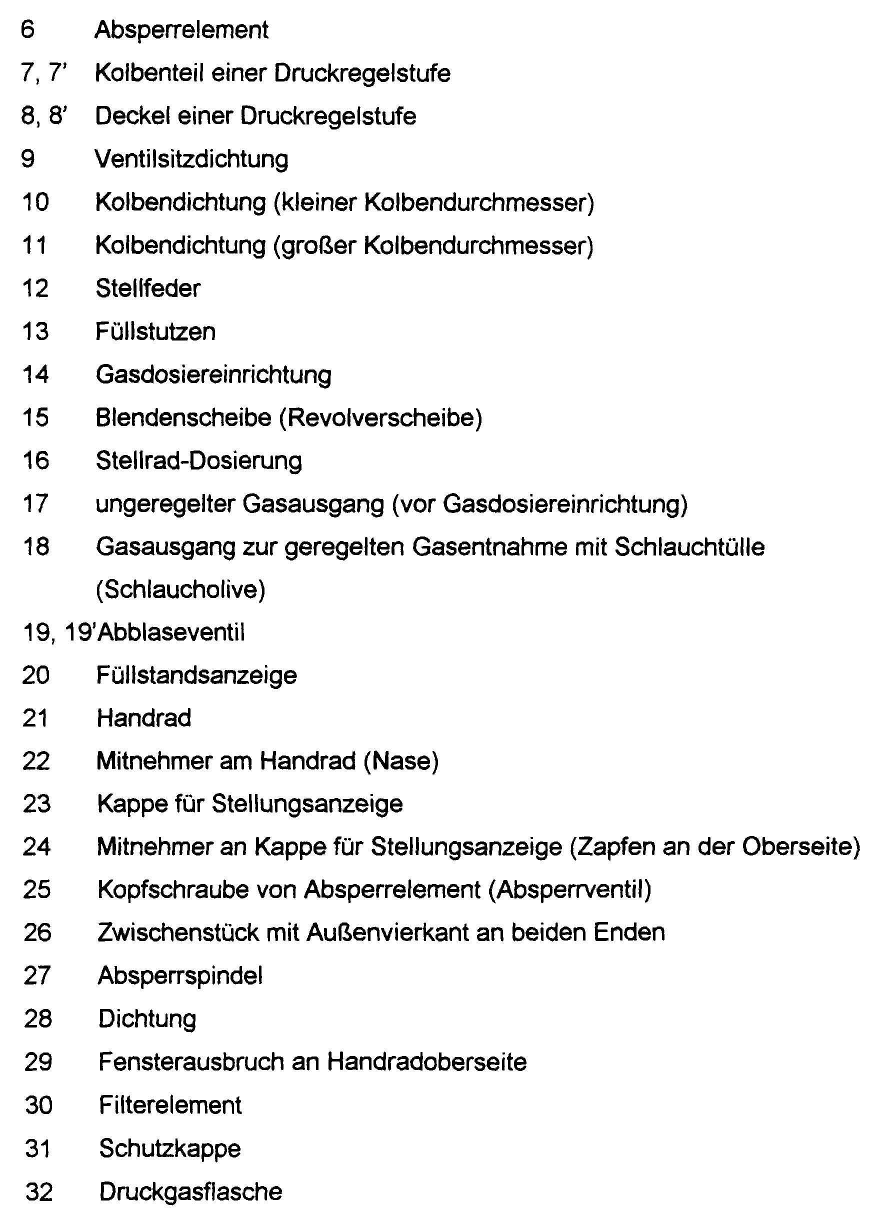

## Patentansprüche

1. Gasentnahmesystem mit integriertem zweistufigem Druckminderer für Druckgasquellen, wobei erste und zweite Regelstufe eine fallende Charakteristik aufweisen und vorzugsweise die Druckregeleinrichtungen der ersten und zweiten Stufe gegenüberliegend angeordnet sind.

2. Gasentnahmesystem nach Anspruch 1, dadurch gekennzeichnet, daß die Druckregeleinrichtungen des zweistufigen Druckminderers Kolbenregler sind.

3. Gasentnahmesystem nach Anspruch 1 oder 2, dadurch gekennzeichnet, daß das Gasentnahmesystem ein Absperrelement enthält.

4. Gasentnahmesystem nach einem der Ansprüche 1 bis 3, dadurch gekennzeichnet, daß das Gasentnahmesystem ein Absperrelement enthält und das Absperrelement zwischen den Regelstufen des Druckminderers angeordnet ist.

5. Druckgasflasche mit einem Gasentnahmesystem nach einem der Ansprüche 1 bis 4.

6. Druckgasflasche mit einem Gasentnahmesystem nach einem der Ansprüche 1 bis 4 mit einer Schutzkappe.

7. Verfahren zur Entnahme von Gasen aus einer Druckgasquelle, dadurch gekennzeichnet, daß das Gas über ein Gasentnahmesystem nach einem der Ansprüche 1 bis 4 aus der Druckgasquelle entnommen wird.

8. Verwendung eines Gasentnahmesystems nach einem der Ansprüche 1 bis 4 zur Gasentnahme aus einer Druckgasquelle.

9. Verwendung nach Anspruch 8, dadurch gekennzeichnet, daß Druckgasbehälter, Druckgasflaschen, Druckdosen, Druckgasleitungen als Druckgasquelle dienen.

10. Verwendung nach Anspruch 8 oder 9 für medizinische Gase oder im medizinischen Bereich.
